# EUROPÄISCHE PATENTSCHRIFT

(11) **EP 0 697 311 B1**
(45) Veröffentlichungstag und Bekanntmachung des Hinweises auf die Patenterteilung: **14.10.1998**
(21) Anmeldenummer: 95112013.8
(22) Anmeldetag: 29.07.1995
(51) Int. Cl.: B60R 1/06

(54) **Halterung für einen Aussenspiegel eines Nutzfahrzeuges**
Support for a truck rearview mirror
Support de rétroviseur extérieur pour véhicule

(30) Priorität: 20.08.1994 DE 4429603
(43) Veröffentlichungstag der Anmeldung: 21.02.1996
(73) Patentinhaber: MEKRA Lang GmbH & Co. KG, D-90765 Fürth (DE)
(72) Erfinder: Lang, Heinrich, D-91465 Ergersheim (DE); Seiboth, Wolfgang, D-91438 Bad Windsheim (DE); Riegel, Herbert, D-91604 Flachslanden (DE)
(74) Vertreter: Hübner, Gerd, Dipl.-Phys.

(56) Entgegenhaltungen:
- EP-A- 0 092 665
- DE-A- 3 436 418
- DE-U- 8 906 260
- DE-U- 9 308 052
- FR-A- 2 579 148
- PATENT ABSTRACTS OF JAPAN vol. 14 no. 262 (M-0981) ,6.Juni 1990 & JP-A-02 074433 (DAITO PRESS KOGYO K.K.) 14.März 1990,

## Beschreibung

Die Erfindung betrifft eine Halterung für einen Außenspiegel eines Nutzfahrzeuges mit einem rohrförmigen Haltearm, dessen fahrzeugfernes Ende mit einem Spiegel versehen ist und dessen fahrzeugnahes Ende an einem mit dem Nutzfahrzeug verbindbaren Lagerbock aus metallischem Material um eine Schwenkachse schwenkbar und in verschiedenen Schwenkstellungen verrastbar gelagert ist.

Eine derartige Halterung für Nutzfahrzeug-Außenspiegel ist beispielsweise aus der EP 0 449 080 B1, der EP 0 527 455 A1 oder der britischen Patentschrift 980 585 bekannt. Diese Halterungen haben gemeinsam, daß in einem Lagerbock aus metallischem Material der ebenfalls aus Metall bestehende Haltearm oder mit dem Haltearm verbundene Schwenkachsen in Form von Metallbolzenschrauben schwenkbar gelagert sind. Diese Halterungen weisen also eine Metall-Metall-Lagerpaarung auf, die im Alltagsbetrieb verschiedene Nachteile zeigt. So kann an den Kontaktstellen zwischen dem Lagerbock und dem Haltearm bzw. dessen Schwenkachse Kontaktkorrosion auftreten, die die Schwenkverstellung des Haltearm erschweren oder gar unmöglich machen kann. Darüber hinaus besteht durch die Kontaktkorrosion eine nicht unerhebliche Gefahr, daß der Haltearm in seiner Stabilität beeinträchtigt wird. Dies kann im ungünstigsten Falle zu einem Abbrechen des Haltearmes führen.

Es hat sich außerdem gezeigt, daß aufgrund der hohen dynamischen Beanspruchungen, der die Spiegelhalterung aufgrund von z.B. Vibrationen unterliegt, die Metall-Metall-Lagerpaarungen stark verschleißen und insbesondere der rohrförmige Haltearm im Bereich seiner Lagerstellen im fahrzeugseitigen Lagerbock einer starken Abnutzung ausgesetzt ist. Insofern besteht die Gefahr, daß Außenspiegel, die mit den bekannten Halterungen an einem Nutzfahrzeug befestigt sind, mit der Zeit zum Wackeln neigen.

Weiterhin sind die vorbekannten Halterungen in ihrer Konstruktion sehr aufwendig und damit nur schwierig zu montieren und mit hohen Kosten herstellbar.

Eine Spiegelhalterung mit den im Oberbegriff des Anspruches 1 angegebenen Merkmalen ist aus der DE-A-34 36 418 bekannt. Bei dieser Halterung ist das fahrzeugnahe Ende des Haltearms direkt als Schwenkachse in eine Schwenklageröfffnung des Lagerbocks eingesetzt. Auf diesen Haltearm ist eine Klemmhülse aus Stahl oder Kunststoffmaterial aufgeschoben, die an einem Haltearm mittels einer zweiteiligen Spannhülse klemmend befestigt wird. Ein Teil der Spannhülse weist einen radial ausladenden Kragen auf, der in axialer Richtung an einem nach innen gerichteten, umlaufenden Vorsprung des rohrförmigen Haltergehäuses in axialer Richtung abgestützt ist. Der zweite Teil der Spannhülse stützt sich ebenfalls formschlüssig am Innenumfang des Haltergehäuses ab. Da die beiden Teile der Spannhülse offensichtlich aus Metall bestehen, ist auch beim Spiegel gemäß DE-A-34 36 418 eine Metall-Metall-Lagerpaarung zwischen Haltearm und dem als Lagerbock dafür dienenden Haltergehäuse vorhanden.

Ausgehend von den geschilderten Problemen des Standes der Technik liegt der Erfindung die Aufgabe zugrunde, eine Halterung für einen Außenspiegel der eingangs genannten Art so auszugestalten, daß Korrosionsprobleme vermieden werden und sich der Aufwand für die Montage der Halterung erheblich herabsetzt.

Diese Aufgabe wird durch die im Kennzeichnungsteil des Anspruches 1 angegebenen Merkmale gelöst.

Durch die demgemäß vorgesehene Lagerbuchse aus Kunststoffmaterial wird eine Schwenklagerstelle mit Kunststoff-Metall-Lagerpaarung geschaffen, bei der die eingangs genannten Korrosionsprobleme grundsätzlich vermieden werden. Weiterhin erfüllt die Lagerbuchse durch den daran angeordneten Ringvorsprung mit Rastverzahnung eine Doppelfunktion, da sie gleichzeitig für die Festlegung des Haltearms in den verschiedenen Schwenkstellungen sorgt. Insofern kann die Anzahl der notwendigen Bauteile für die erfindungsgemäße Halterung gegenüber dem Stand der Technik herabgesetzt werden, was die bezweckte Montagevereinfachung und Senkung der Herstellungskosten mit sich bringt. Nicht zuletzt wird durch eine geeignete Auswahl des Kunststoffmaterials für die Lagerbuchse - beispielsweise kann Polyamid verwendet werden - die Lagerung extrem verschleißfest gestaltet werden, so daß auch den eingangs geschilderten Verschleißproblemen entgegengewirkt wird.

Weitere Merkmale, Einzelheiten, Vorteile und bevorzugte Ausführungsformen der Erfindung sind den Unteransprüchen und der nachfolgenden Beschreibung entnehmbar, in der Ausführungsbeispiele des Erfindungsgegenstandes anhand der beigefügten Zeichnungen näher erläutert werden. Es zeigen
- Fig. 1: einen Vertikalschnitt durch eine erste Ausführungsform einer Spiegelhalterung,
- Fig. 2: einen Horizontalschnitt entlang der Schnittlinie A-A nach Fig. 1,
- Fig. 3: einen Vertikalschnitt durch eine zweite Ausführungsform einer Spiegelhalterung und
- Fig. 4 und 5: Horizontalschnitte durch die Spiegelhalterung entlang den Schnittlinien A-A bzw. B-B gemäß Fig. 3.

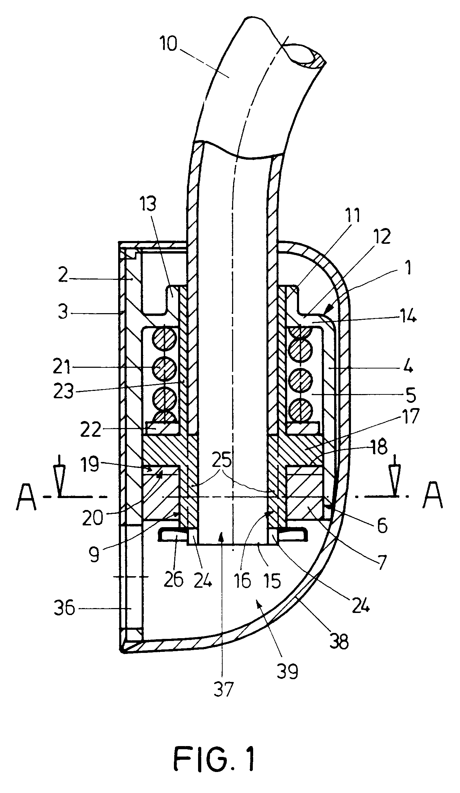

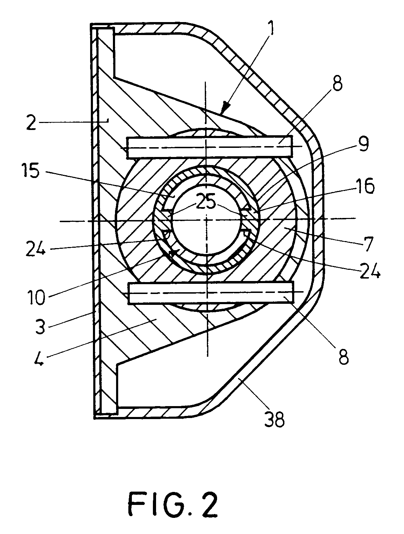

In der Ausführungsform gemäß den Fig. 1 und 2 ist der aus Aluminium gefertigte Lagerbock der Spiegelhalterung als Ganzes mit 1 bezeichnet. Er weist eine im wesentlichen rechteckig ausgebildete Sockelplatte 2 auf, die unter Zwischenlage einer dünnen, etwas elastischen Platte 3 aus Kunststoff in nicht näher dargestellter Weise mit der A-Säule einer Fahrerkabine eines Nutzfahrzeuges verschraubbar ist.

Von der der Platte 3 abgewandten Seite der Sockelplatte 2 steht ein einstückig angeformter, nasenförmiger Lagerkörper 4 des Lagerbocks 1 ab, der in seinem Inneren einen zylindrischen, nach unten offenen Aufnahmeraum 5 aufweist. In der dementsprechend gebildeten unteren Öffnung 6 des Aufnahmeraums 5 ist ein Lagerring 7 aus Aluminium eingesetzt, der - wie in Fig. 2 erkennbar ist - mittels zweier paralleler, den Lagerkörper 4 und den Lagerring 7 horizontal durchsetzenden Stiften 8 im Lagerkörper 4 festgelegt ist. Der Lagerring 7 bildet eine erste Schwenklageröffnung 9 für den als Ganzes mit 10 bezeichneten, rohrförmigen Haltearm des Außenspiegels. Eine zweite Schwenklageröffnung 11 ist in der Oberseite 12 des Lagerkörpers koaxial mit der Schwenklageröffnung 9 vorgesehen. Diese Schwenklageröffnung 11 ist durch einen Ringkragen 13 gebildet, der auf der Außenseite einer Ringschulter 14 an der Oberseite 12 des Lagerkörpers 4 absteht.

Wie aus Fig. 1 ferner deutlich wird, ist das fahrzeugnahe Ende 15 des Haltearmes 10 direkt als Schwenkachse in die beiden Schwenklageröffnungen 9, 11 eingesetzt, wobei eine Lagerbuchse 16 in der Schwenklageröffnung 9 zwischen der Innenseite des Lagerrings 7 und der Außenseite des rohrförmigen Haltearms 10 vorgesehen ist. Diese Lagerbuchse 16 besteht aus Polyamid-Kunststoffmaterial und bildet folglich eine Schwenklagerstelle mit einer Kunststoff-Metall-Lagerpaarung zwischen Haltearm 10 und Schwenklageröffnung 9.

Die Lagerbuchse 16 ist ferner auf ihrer Außenseite mit einem Ringvorsprung 17 versehen, der in dem in Fig. 1 und 2 gezeigten Ausführungsbeispiel im Aufnahmeraum 5 vor dem Lagerring 7 zu liegen kommt. Die untere, in Axialrichtung weisende Flanke 18 des Ringvorsprunges 17 ist mit einer Rastverzahnung 19 versehen, die mit einer Gegenverzahnung 20 an der ihr zugewandten Innenseite des Lagerrings 7 des Lagerbocks 1 in Eingriff steht. Der Rasteingriff wird durch eine Schraubendruckfeder 21 gesichert, die in den Aufnahmeraum 5 zwischen der Ringschulter 14 und dem Ringvorsprung 17 unter Zwischenlage einer Ringscheibe 22 seitens des Ringvorsprunges 17 eingesetzt ist.

Auf der dem Lagerring 7 abgewandten Seite ist die Lagerbuchse 16 mit einem einstückig angeformten, hülsenförmigen Verlängerungsstück 23 versehen, das entlang des Haltearmes 10 bis in die zweite Schwenklageröffnung 11 verläuft. Die Schwenklageröffnung 11 bildet mit dem Haltearm 10 und dem Verlängerungsstück 23 also eine zweite, in Axialrichtung mit Abstand zur ersten Schwenklagerstelle in der Schwenklageröffnung 9 angeordnete Schwenklagerstelle zwischen Haltearm 10 und Lagerbock 1, die ebenfalls als Kunststoff-Metall-Lagerpaarung ausgebildet ist.

Wie aus einer Zusammenschau der Fig. 1 und 2 deutlich wird, ist die Lagerbuchse 16 mit Ringvorsprung 17 und Verlängerungsstück 23 vom fahrzeugnahen Ende 15 des Haltearms 10 auf diesen aufgeschoben, wobei das fahrzeugnahe Ende 15 des Haltearms 10 in seiner Wandung zwei axialparallele Schlitze 24 als Arretieröffnungen aufweist, in die jeweils ein Längssteg 25 an der Innenseite der Lagerbuchse 16 als Arretiervorsprung eingreift. Damit ist die Lagerbuchse 16 mit Ringvorsprung 17 und Verlängerungsstück 23 gegenüber dem Haltearm 10 in Drehrichtung arretiert. Zusätzlich ist die Lagerbuchse 16 durch einen auf das fahrzeugnahe Ende 15 des Haltearms 10 aufgeschobenen Federring 26 gegen ein Abziehen vom Haltearm 10 gesichert.

Zur Montage der Halterung gemaß den Fig. 1 und 2 ist kurz auszuführen, daß die Schraubendruckfeder 21, die Ringscheibe 22, die Lagerbuchse 16 und der Lagerring 7 in der in Fig. 1 gezeigten Zusammenstellung in den Aufnahmeraum 5 des Lagerbocks 1 eingelegt und gegen die Beaufschlagung der Schraubendruckfeder 21 eingeschoben werden. In dieser Stellung wird der Lagerring 7 dann mittels der Stifte 8 festgelegt. Anschließend wird von oben her das fahrzeugnahe Ende 15 des Haltearms 10 in die Lagerbuchse 16 eingeschoben, wobei insbesondere die Längsstege 25 an der Lagerbuchse 16 in die Schlitze 24 im rohrförmigen Haltearm 10 eingepreßt und somit die Lagerbuchse 16 verdrehgesichert mit letzterem verbunden werden.

Zur Funktion der Halterung gemäß den Fig. 1 und 2 ist kurz auszuführen, daß beim Schwenken des Haltearms 10 - beispielsweise zum Abklappen des Spiegels bei beengten Straßenverhältnissen - die Zähne der Rastverzahnung 19 an der Lagerbuchse 16 über die der Gegenverzahnung 20 am Lagerring 7 gleiten, womit die Baugruppe bestehend aus Haltearm 10, Lagerbuchse 16 und Ringscheibe 22 gegen den Federdruck der Schraubendruckfeder 21 nach oben ausweicht. Der Haltearm 10 kann so in verschiedenen Schwenkstellungen verrastet werden.

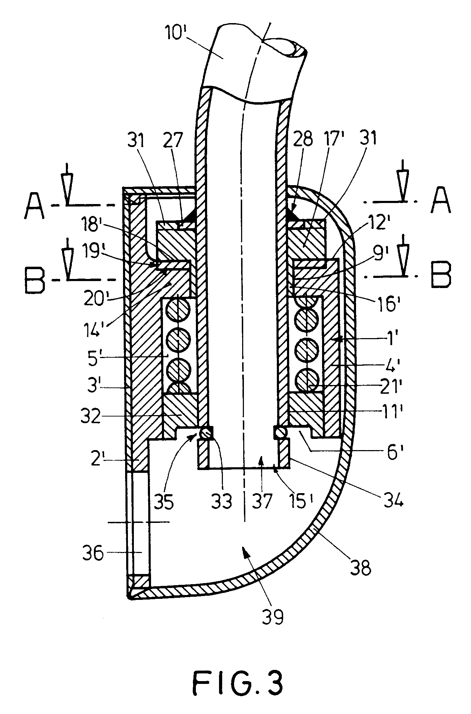

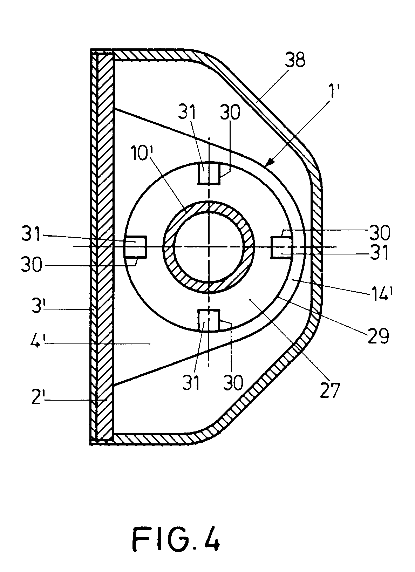

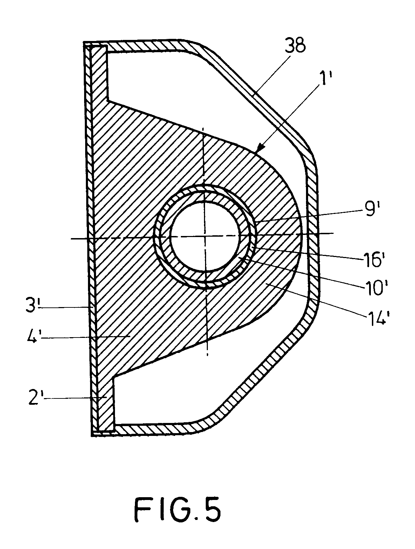

Die in den Fig. 3 bis 5 gezeigte Ausführungsform weist wiederum einen Lagerbock 1' mit Sockelplatte 2' und Platte 3' auf, der analog dem Ausführungsbeispiel gemäß den Fig. 1 und 2 aufgebaut und am Fahrzeug befestigbar ist. Der Lagerkörper 4' ist ebenfalls nasenförmig ausgebildet und weist einen Aufnahmeraum 5' mit einer unten liegenden Öffnung 6' auf.

Bei dem Lagerbock 1' ist in der Oberseite 12' des Lagerkörpers 4' eine erste Schwenklageröffnung 9' vorgesehen, durch die der Haltearm 10' unter Zwischenlage einer Lagerbuchse 16' aus Polyamid-Kunststoffmaterial hindurchläuft. Die Lagerbuchse 16' ist wiederum mit einem einstückig angeformten Ringvorsprung 17' versehen, der auf der Oberseite 12' des Lagerkörpers 4' zu liegen kommt. An der dieser Oberseite 12' zugewandten Flanke 18' weist der Ringvorsprung 17' eine Rastverzahnung 19' auf, die mit einer ringförmigen Gegenverzahnung 20' auf der Oberseite 12' in Eingriff steht. Die Lagerbuchse 16' ist mit dem Haltearm 10' des Spiegels drehfest durch einen Mitnehmerring 27 verbunden, der oberhalb des Ringvorsprunges 17' an den Haltearm 10' angeschweißt ist (Verschweißung 28). Der Mitnehmerring 27 weist im Bereich seiner Außenkante 29 vier gleichmäßig über den Umfang verteilte, rechteckige Ausnehmungen 30 auf, in die Axialvorsprünge 31 auf der Oberseite der Lagerbuchse 16' formschlüssig eingreifen. Damit ist die Lagerbuchse 16' gegenüber dem Haltearm 10' dreharretiert.

Das durch die Schwenklageröffnung 9' hindurchgesteckte fahrzeugnahe Ende 15' des Haltearms 10' reicht bis über die Öffnung 6' des Aufnahmeraums 5' nach unten hinaus. Auf das Ende 15' ist ein Lagerring 32 aus Polyamid-Kunststoffmaterial aufgeschoben, der im Bereich der Öffnung 6' des Aufnahmeraums 5' zu liegen kommt. In dieser Position wird der Lagerring 32 durch einen Splint 33 gesichert, der in zwei tangential in gegenüberliegenden Bereichen der Wandung 34 des Haltearms 10' eingesägten Querschlitzen 35 sitzt. Zwischen dem Lagerring 32 und der Ringschulter 14' an der Oberseite des Aufnahmeraums 5' ist wiederum eine Schraubendruckfeder 21' eingesetzt, die die Baugruppe aus Haltearm 10', Mitnehmerring 27, Lagerbuchse 16' und Kunststoff-Lagerring 32 in Richtung des Rasteingriffes der Rastverzahnung 19' mit der Gegenverzahnung 20' am Lagerbock 1' beaufschlagt.

Aufgrund der erläuterten Konstruktion der Spiegelhalterung gemäß den Fig. 3 bis 5 weist der Haltearm 10' eine erste Schwenklagerstelle im Bereich der oberen Schwenklageröffnung 9' auf, die aufgrund der Lagerbuchse 16' aus Polyamid-Kunststoffmaterial eine Kunststoff-Metall-Lagerpaarung bildet. Eine zweite, axial beabstandete Schwenklagerstelle ist durch die Schwenklageröffnung 11' im Lagerring 32 gebildet, die wiederum eine Kunststoff-Metall-Lagerpaarung aufweist.

Zur Montage der Spiegelhalterung gemäß den Fig. 3 bis 5 ist kurz auszuführen, daß der Haltearm 10' mit dem aufgeschweißten Mitnehmerring 27 und der aufgesteckten Lagerbuchse 16' auf den Lagerkörper 4' aufgesteckt wird, so daß das fahrzeugnahe Ende 15' des Haltearms 10' durch die Schwenklageröffnung 9' und den Aufnahmeraum 5' hindurchgesteckt wird. Darauf werden die Schraubendruckfeder 21' in den Aufnahmeraum 5' eingelegt sowie der Lagerring 32 gegen den Federdruck eingepreßt und durch den Splint 33 gesichert. Auch hier wird deutlich, daß die Montage extrem einfach vonstatten geht.

Zur Funktionsweise der Spiegelhalterung gemäß den Fig.3 bis 5 ist kurz festzuhalten, daß beim Verschwenken des Haltearms 10' die Zähne der Rastverzahnung 19' wiederum über die der Gegenverzahnung 20' gleiten und somit die Einheit aus Haltearm 10', Mitnehmerring 27, Lagerbuchse 16' und Lagerring 32 gegen die Beaufschlagung durch die Schraubendruckfeder 21' nach oben bewegt wird. Eine Festlegung des Haltearms 10' in unterschiedlichen Schwenkstellungen ist damit wiederum möglich.

Beiden erläuterten Ausführungsbeispielen ist im übrigen gemeinsam, daß die Sockelpatte 2, 2' unterhalb des Lagerkörpers 4, 4' mit einer Durchtrittsöffnung 36 versehen ist, durch die ein Kabel für die motorische Verstellung des am fahrzeugfernen Ende des Haltearms 10 angeordneten Spiegels durchziehbar ist. Das Kabel kann von der Durchtrittsöffnung 36 in sehr einfacher Weise in die freien Innenöffnung 37 des Haltearms 10, 10' eingeschoben werden.

Ferner ist der gesamte Lagerbock 1, 1' mit dem fahrzeugnahen Ende 15 des Haltearms 10 durch eine Abdeckkappe 38 verschließbar, die vor der Durchtrittsöffnung 36 und der Innenöffnung 37 einen Freiraum 39 für die Kabeldurchführung beläßt.

Zusammenfassend weist der Erfindungsgegenstand verschiedene Vorteile auf:
- Der Haltarm 10, 10' ist vor Kontaktkorrosion und Verschleiß durch die Lagerbuchsen 16, 16' bzw. den Lagerring 32 geschützt.
- Auch bei einer längeren Einsatzzeit der Halterung ergibt sich kein nennenswertes Spiel im Bereich der Schwenklagerstellen, da sich die Kunststoff-Metall-Lagerpaarungen stetig einander anpassen.
- Durch die beabstandeten Lagerstellen im Bereich der Schwenklageröffnungen 9, 11 bzw. 9', 11' ist eine zweifache Abstützung des Haltearms gewährleistet, die die auftretenden, quer zur Schwenkachse verlaufenden Kräfte stabil abfängt.
- Die Montage ist extrem einfach, wobei keine Verschweißungen (Fig. 1, 2) bzw. nur eine Verschweißung (Fig. 3 bis 5) notwendig ist. Insgesamt ist die Anzahl der Einzelteile sehr gering, so daß der Erfindungsgegenstand sehr kostengünstig herstellbar ist.
- Die Spiegelhalterung ist sehr einfach in ihre einzelnen Bauteile zerlegbar, was sich günstig auf die in jüngster Zeit regelmäßig geforderte umweltfreundliche Entsorgbarkeit der Konstruktionsbauteile auswirkt.
- Am rohrförmigen Haltearm sind nur ganz einfache Bearbeitungsschritte notwendig, nämlich das Einbringen der Schlitze 24 bzw. der Querschlitze 35.
- Mit der erfindungsgemäßen Spiegelhalterung ist eine sehr einfache Kabelführung über die Durchtrittsöffnung 36 und die freie Innenöffnung 37 des Haltearms 10 möglich.

## Patentansprüche

1. Halterung für einen Außerspiegel eines Nutzfahrzeuges, mit einem rohrförmigen Haltearm (10, 10'), dessen fahrzeugfernes Ende mit einem Spiegel versehen ist und dessen fahrzeugnahes Ende (15, 15') in einem mit dem Nutzfahrzeug verbindbaren Lagerbock (1, 1') aus metallischem Material um eine Schwenkachse schwenkbar und in verschiedenen Schwenkstellungen verrastbar gelagert ist, wobei das fahrzeugnahe Ende (15, 15') des Haltearms (10, 10') direkt als Schwenkachse in eine Schwenklageröffnung (9, 9') des Lagerbocks (1, 1') eingesetzt ist, dadurch gekennzeichnet, daß zwischen der Schwenklageröffnung (9, 9') und dem Haltearm (10, 10') eine drehfest mit dem Haltearm (10, 10') verbundene Lagerbuchse (16, 16') aus Kunststoffmaterial zur Bildung einer Schwenklagerstelle mit Kunststoff-Metall-Lagerpaarung zwischen Haltearm (10, 10') und Lagerbock (1, 1') angeordnet ist, wobei die Lagerbuchse (16, 16') weiterhin einen Ringvorsprung (17, 17') aufweist, der an einer seiner in Axialrichtung weisenden Flanken (18, 18') mit einer Rastverzahnung (19, 19') versehen ist, die mit einer Gegenverzahnung (20, 20') am Lagerbock (1, 1') lösbar in Eingriff steht.

2. Halterung nach Anspruch 1, dadurch gekennzeichnet, daß eine zweite in Axialrichtung mit Abstand zur ersten Schwenklagerstelle (Schwenklageröffnung 9, 9') angeordnete Schwenklagerstelle (Schwenklageröffnung 11, 11') zwischen Haltearm (10, 10') und Lagerbock (1, 1') vorgesehen ist, die ebenfalls als Kunststoff-Metall-Lagerpaarung ausgebildet ist.

3. Halterung nach Anspruch 2, dadurch gekennzeichnet, daß die Kunststoff-Metall-Lagerpaarung der zweiten Schwenklagerstelle (Schwenklageröffnung 11, 11') durch ein axiales Verlängerungsstück (23) der Lagerbuchse (16) gebildet ist.

4. Halterung nach Anspruch 2 oder 3, dadurch gekennzeichnet, daß die Lagerbuchse (16) auf das fahrzeugnahe Ende (15) des Haltearms (10) aufgeschoben ist und zur Dreharretierung auf ihrer Innenseite mindestens einen Arretiervorsprung (Längssteg 25) aufweist, der in mindestens eine Arretieröffnung (Schlitz 24) am Haltearm (10) eingreift.

5. Halterung nach Anspruch 4, dadurch gekennzeichnet, daß die mindestens eine Arretieröffnung durch einen längsaxial verlaufenden, zum Ende des Haltearms (10) offenen Schlitz (24) in dessen Wandung (34) und der Arretiervorsprung durch einen darin eingreifenden Längssteg (25) gebildet sind.

6. Halterung nach einem der Ansprüche 1 bis 5, dadurch gekennzeichnet, daß der Lagerbock (1) einen einseitig offenen Aufnahmeraum (5) aufweist, in dessen Öffnung (6) ein die Schwenklageröffnung (9) bildender Lagerring (7) fixiert ist, der einerseits die Lagerbuchse (16) der ersten Schwenklagerstelle (Schwenklageröffnung 9) drehbar lagert und andererseits die Gegenverzahnung (20) für die Rastverzahnung (19) am Ringvorsprung (17) der Lagerbuchse (16) aufweist.

7. Halterung nach Anspruch 6, dadurch gekennzeichnet, daß im Aufnahmeraum (5) zwischen dem Ringvorsprung (17) der Lagerbuchse (16) und einer Ringschulter (14) an seinem der Öffnung (6) abgewandten Ende eine Schraubendruckfeder (21) eingesetzt ist, die die Lagerbuchse (16) in Richtung des Rasteingriffes zwischen der Rast- (19) und Gegenverzahnung (20) beaufschlagt.

8. Halterung nach Anspruch 1 oder 2, dadurch gekennzeichnet, daß der Haltearm (10') mit einem Mitnehmerring (27) versehen ist, der zur Dreharretierung der Lagerbuchse (16') gegenüber dem Haltearm (10') mit Ausnehmungen (30) versehen ist, in die Axialvorsprünge (31) an der Lagerbuchse (16') eingreifen.

9. Halterung nach Anspruch 8, dadurch gekennzeichnet, daß der Mitnehmerring (27) mit dem Ringvorsprung (17') der Lagerbuchse (16') auf der dem fahrzeugnahen Ende (15') des Haltearms (10') abgewandten Oberseite (12') des Lagerbocks (1') aufsitzt, wobei die Gegenverzahnung (20) auf dieser Oberseite (12') angeordnet und die Schwenklageröffnung (9') der ersten Schwenklagerstelle von einer Ringschulter (14') am Lagerbock (1') im Bereich dieser Oberseite (12') gebildet ist.

10. Halterung nach Anspruch 2 und 9, dadurch gekennzeichnet, daß die zweite Schwenklagerstelle (Schwenklageröffnung 11') durch einen auf dem fahrzeugnahen Ende (15') des Haltearmes (10') axial gesichert sitzenden Lagerring (32) aus Kunststoffmaterial gebildet ist, der in der Öffnung (6') eines zum fahrzeugnahen Ende (15') des Haltearmes (10') offenen Aufnahmeraum (5') des Lagerbocks (1') drehbar gelagert ist.

11. Halterung nach Anspruch 10, dadurch gekennzeichnet, daß zwischen der Ringschulter (14') des Lagerbocks (1') und dem Lagerring (32) im Aufnahmeraums (5') eine Schraubendruckfeder (21') eingesetzt ist, die die Baugruppe aus Haltearm (10'), Mitnehmerring (27), Lagerbuchse (16') und Lagerring (32) in Richtung des Rasteingriffes der Rastverzahnung (19') an der Lagerbuchse (16') mit der Gegenverzahnung (20') am Lagerbock (1') beaufschlagt.

## Claims

1. A mounting for a external rear-view mirror of a commercial vehicle, comprising a tubular arm (10, 10'), of which the end remote from the vehicle is provided with a mirror and of which the end (15, 15') close to the vehicle is supported on a metal bracket (1, 1') to be joined to the commercial vehicle, for pivoting about a pivot axis ad for snap-in locking in various pivoting positions, the end (15, 15'), close to the vehicle, of the arm (10, 10') being directly inserted as a pivoting pin into a pivot bearing opening (9, 9') of the bracket (1, 1'), characterized in that a bearing bush (16, 16') of plastic material non-rotatably joined to the arm (10, 10') being disposed between the pivot bearing opening (9, 9') ad the arm (10, 10'), forming a pivot bearing that features a plastics-metal bearing combination between the arm (10, 10') ad the bracket (1, 1'), the bearing bush (16, 16') further comprising a annular projection (17, 17') provided with locking teeth (19, 19') on one of its axially extending flanks (18, 18'), the locking teeth (19, 19') detachably meshing with mating teeth (20, 20') on the bracket (1, 1').

2. A mounting according to claim 1, characterized in that a second pivot bearing (pivot bearing opening 11, 11') axially spaced from the first pivot bearing (pivot bearing opening 9, 9') is provided between the arm (10, 10') and the bracket (1, 1') and is also a plastics-metal bearing combination.

3. A mounting according to claim 2, characterized in that the plastics-metal bearing combination of the second pivot bearing (pivot bearing opening 11, 11') is formed by an axial extension piece (23) of the bearing bush (16).

4. A mounting according to claim 2 or 3, characterized in that the bearing bush (16) is slipped onto the end (15), close to the vehicle, of the arm (10), having at least one locking projection (longitudinal web 25) on its inside for the purpose of being arrested non-rotatably, the locking projection (25) engaging with at least one arresting aperture (slit 24) on the arm (10).

5. A mounting according to claim 4, characterized in that the at least one arresting aperture is formed by a slit (24) of longitudinal axial extension, which is provided on the wall (34) of the arm (10) and open towards the latter's end, and in that the locking projection is formed by a longitudinal web (25) engaging with the slit (24).

6. A mounting according to one of claims 1 to 5, characterized in that the bracket (1) has a receptacle (5) open on one side, in the opening (6) of which a bearing ring (7) is fixed, which forms the pivot bearing opening (9), and which on the one hand rotatably supports the bearing bush (16) of the first pivot bearing (pivot bearing opening 9) and on the other hand exhibits the teeth (20) mating the locking teeth (19) on the annular projection (17) of the bearing bush (16).

7. A mounting according to claim 6, characterized in that between the annular projection (17) of the bearing bush (16) and an annular shoulder (14), a helical compression spring (21) is inserted in the receptacle (5) at the latter's end turned away from the opening (6), acting on the bearing bush (16) in the direction of the locking engagement of the locking teeth (19) with the mating teeth (20).

8. A mounting according to claim 1 or 2, characterized in that the arm (10') is provided with a driver ring (27), which is provided with recesses (30) for the purpose of arresting the bearing bush (16') from rotating relative to the arm (10'), axial projections (31) on the bearing bush (16') meshing with the recesses (30).

9. A mounting according to claim 8, characterized in that the driver ring (27), together with the annular projection (17') of the bearing bush (16'), lodges on such upper side (12') of the bracket (1') as is turned away from the end (15'), close to the vehicle, of the arm (10'), the mating teeth (20) being disposed on this upper side (12'), and the pivot bearing opening (9') of the first pivot bearing being formed by a annular shoulder (14') on the bracket (1') in the vicinity of this upper side (12').

10. A mounting according to claim 2 and 9, characterized in that the second pivot bearing (pivot bearing opening 11') is formed by a bearing ring (32) of plastic material, which is axially fixed on the end (15'), close to the vehicle, of the arm (10') and which lodges rotatably in the opening (6') of a receptacle (5') of the bracket (1'), which is open towards the end (15'), close to the vehicle, of the arm (10').

11. A mounting according to claim 10, characterized in that a helical compression spring (21') is inserted in the receptacle (5') between the annular shoulder (14') of the bracket (1') and the bearing ring (32), acting on the aggregate consisting of the arm (10'), driver ring (27), bearing bush (16') and bearing ring (32) in the direction of the locking engagement of the locking teeth (19') on the bearing bush (16') with the mating teeth (20') on the bracket (1').

## Revendications

1. Fixation pour un rétroviseur extérieur d'un véhicule utilitaire, comportant un bras de support tubulaire (10, 10') dont l'extrémité éloignée du véhicule est munie d'un rétroviseur et dont l'extrémité (15, 15') proche du véhicule est montée dans un palier (1, 1'), en métal et pouvant être assemblé au véhicule utilitaire, de manière à pouvoir pivoter autour d'un axe de pivotement et à pouvoir être enclenchée dans différentes positions de pivotement, l'extrémité (15, 15'), proche du véhicule, du bras de support (10, 10') étant placée directement comme axe de pivotement dans un orifice de palier de pivotement (9, 9') du palier (1, 1'),
caractérisée en ce que, entre l'orifice de palier de pivotement (9, 9') et le bras de support (10, 10'), il est agencé un coussinet (16, 16'), couplé fixe en rotation au bras de support (10, 10'), construit en matière plastique et destiné à former un point d'appui de pivotement avec un appariement de palier plastique-métal entre le bras de support (10, 10') et le palier (1, 1'), le coussinet (16, 16') comportant en plus une protubérance annulaire (17, 17') qui est munie, sur un de ses flancs (18, 18') pointant en direction axiale, d'une denture d'enclenchement (19, 19') qui est en prise amovible avec une denture complémentaire (20, 20') sur le palier (1, 1').

2. Fixation selon la revendication 1, caractérisée en ce qu'il est prévu entre le bras de support (10, 10') et le palier (1, 1') un deuxième point d'appui de pivotement (orifice de palier de pivotement 11, 11') qui est placé en direction axiale à une certaine distance du premier point d'appui de pivotement (orifice de palier de pivotement 9, 9') et qui est conçu également comme appariement de palier plastique-métal.

3. Fixation selon la revendication 2, caractérisée en ce que l'appariement de palier plastique-métal du deuxième point d'appui de pivotement (orifice de palier de pivotement 11, 11') est formé par une pièce de prolongement axial (23) du coussinet (16).

4. Fixation selon la revendication 2 ou 3, caractérisée en ce que le coussinet (16) est enfilé sur l'extrémité (15), proche du véhicule, du bras de support (10) et comporte pour l'arrêt en rotation sur sa face intérieure au moins une protubérance d'arrêt (traverse longue 25) qui pénètre dans au moins un orifice d'arrêt (fente 24) sur le bras de support (10).

5. Fixation selon la revendication 4, caractérisée en ce que l'orifice d'arrêt · il y en a au moins un - est formé par une fente (24) qui s'étend selon l'axe longitudinal et qui est ouverte à l'extrémité du bras de support (10) dans sa paroi (34) et en ce que la protubérance d'arrêt est formée par une traverse longue (25) pénétrant à l'intérieur.

6. Fixation selon l'une des revendications 1 à 5, caractérisée en ce que le palier (1) comporte un espace de logement (5), ouvert d'un côté, dans l'orifice (6) duquel est fixée une bague de palier (7), qui forme l'orifice de palier de pivotement (9), qui loge d'une part le coussinet (16) du premier point d'appui de pivotement (orifice de palier de pivotement 9) de manière à le laisser tourner et qui comporte d'autre part la denture complémentaire (20) pour la denture d'enclenchement (19) sur la protubérance annulaire (17) du coussinet (16).

7. Fixation selon la revendication 6, caractérisée en ce qu'il est placé dans l'espace de logement (5) entre la protubérance annulaire (17) du coussinet (16) et un épaulement annulaire (14), sur son extrémité opposée à l'orifice (6), un ressort cylindrique de pression (21) qui agit sur le coussinet (16) dans le sens de l'enclenchement entre la denture d'enclenchement (19) et la denture complémentaire (20).

8. Fixation selon la revendication 1 ou 2, caractérisée en ce que le bras de support (10') est muni d'une bague d'entraînement (27) qui est munie, pour l'arrêt en roatation du coussinet (16') par rapport au bras de support (10'), d'évidements (30) dans lesquels pénètrent des protubérances axiales (31) sur le coussinet (16').

9. Fixation selon la revendication 8, caractérisée en ce que la bague d'entraînement (27) est placée avec la protubérance annulaire (17') du coussinet (16') sur le dessus (12') de palier (1') opposé à l'extrémité (15'), proche du véhicule, du bras de support (10'), la denture complémentaire (20) étant disposée sur ce dessus (12') et l'orifice de palier de pivotement (9') du premier point d'appui de pivotement étant formé par un épaulement annulaire (14') sur le palier (1') dans la zone de ce dessus (12').

10. Fixation selon les revendications 2 et 9, caractérisée en ce que le deuxième point d'appui de pivotement (orifice de palier de pivotement 11') est formé par une bague de palier (32) en matière plastique qui est bloquée axialement sur l'extrémité (15'), proche du véhicule, du bras de support (10') et qui est montée libre en rotation dans l'orifice (6') d'un espace de logement (5') de palier (1') qui est ouvert à l'extrémité (15'), proche du véhicule, du bras de support (10').

11. Fixation selon la revendication 10, caractérisée en ce qu'il est placé entre l'épaulement annulaire (14') du palier (1') et la bague de palier (32), dans l'espace de logement (5'), un ressort cylindrique de pression (21') qui agit sur le groupe formé du bras de support (10'), de la bague d'entraînement (27), du coussinet (16') et de la bague de palier (32), dans le sens de l'enclenchement de la denture d'enclenchement (19') sur le coussinet (16') avec la denture complémentaire (20') sur le palier (1').
